# EUROPÄISCHE PATENTSCHRIFT

(11) **EP 0 531 781 B1**
(45) Veröffentlichungstag und Bekanntmachung des Hinweises auf die Patenterteilung: **10.01.1996**
(21) Anmeldenummer: 92114334.3
(22) Anmeldetag: 21.08.1992
(51) Int. Cl.: H01S 3/03, H01S 3/086

(54) **Bandleiterlaser**
Gas slab laser
Laser à ruban de gaz

(30) Priorität: 13.09.1991 DE 4130577
(43) Veröffentlichungstag der Anmeldung: 17.03.1993
(73) Patentinhaber: CARL ZEISS JENA GmbH, D-07745 Jena (DE)
(72) Erfinder: Arndt, Karlheinz, W-8000 München 83 (DE)
(74) Vertreter: Muhsfeldt, Willi

(56) Entgegenhaltungen:
- EP-A- 0 305 893
- EP-A- 0 477 865
- US-A- 4 713 825
- US-A- 4 879 721

## Beschreibung

Die vorliegende Erfindung betrifft einen Bandleiterlaser, welcher ein Gehäuse und zwei Metallelektroden enthält, zwischen denen ein Entladungsspalt gebildet ist, welcher zwei Resonatorspiegel und auf einer Seite ein Strahlaustrittsfenster enthält, wobei die Spiegel durch zumindest zwei zueinander parallel laufende Stäbe mit sehr geringem Temperaturausdehnungskoeffizienten in einem genau fixierten gegenseitigen Abstand gehalten werden, wobei die Elektroden in Richtung des Laserstrahles nur an einer Stelle, der Bezugsebene, mit dem Gehäuse und den Stäben starr verbunden sind und an einer zweiten Stelle gegenüber dem Gehäuse gegen senkrecht zum Entladungsspalt laufende Bewegungen gesichert sind.

Bandleiterlaser sind aus der DE-OS 37 29 053 bekannt. Ein Aufbau nach dem Oberbegriff ist in der DE-Anmeldung P 40 30 441.8 beschrieben. Dort sind Stäbe mit sehr geringen Temperaturausdehnungskoeffizienten an zwei einander gegenüber liegenden Stirnwänden eines Lasergehäuses starr befestigt, wobei an einer Stirnwand, der Bezugsebene, auch die Elektroden starr befestigt sind, an der gegenüber liegenden Stirnwand dagegen über eine oder mehrere Paßstifte in Richtung des Entladungsspaltes beweglich gehalten sind.

Der Erfindung liegt das Problem zugrunde, daß unvermeidbare Temperaturunterschiede zwischen der Oberseite und der Unterseite des Lasers, die auf die Erwärmung beim Betrieb zurückgehen, zu einer Verkrümmung der Stäbe, des Gehäuses und der Stirnplatte führen, die sich störend auswirken, sofern sie nicht durch eine gekühlte oder zwecks ausreichender Wärmeleitung extrem dick ausgeführte Gehäusewand schnell ausgeglichen werden. Durch die Stäbe wird eine undefinierte Verformung der angrenzenden Teile des Gehäuses hervorgerufen, da die Stäbe einzelne Punkte des Gehäuses auf konstantem Abstand halten und die übrigen Teile sich um diese Punkte herum verwinden und auch die Stäbe in eine gebogene Form bringen. Diese Verformung ändert die Lage des Laserstrahles und wirkt sich besonders schädlich aus, wenn zumindest ein Spiegel an der Stirnwand befestigt sein soll. Letzteres ist notwendig, wenn der Spiegel justierbar sein soll. Dies tritt besonders stark auf, wenn die Stäbe an einer Stirnwand fixiert sind.

Die Aufgabe, die der Erfindung zugrunde liegt, besteht in einer weiteren Erhöhung der Strahllagestabilität mit geringem Aufwand und bei geringem Gewicht des Lasers. Diese Aufgabe wird bei einem Bandleiterlaser nach dem Oberbegriff dadurch gelöst, daß zumindest ein Spiegel an einer Halterung in seiner Neigung gegenüber dem Entladungsspalt justierbar befestigt ist, daß der justierbare Spiegel über Stäbe mit sehr geringem Temperaturausdehnungskoeffizienten in seiner axialen Lage und in seiner Winkellage gegenüber der Bezugsebene fixiert ist, daß die Bezugsebene zumindest annähernd in der Mitte zwischen den Resonatorspiegeln liegt und daß die Stäbe mit einer Halteplatte für den Spiegel, nichtaber mit einer Stirnwand des Gehäuses starr verbunden sind. Dadurch, daß erfindungsgemäß die Bezugsebene in der Mitte zwischen den Spiegeln gelegt ist, tritt der oben beschriebene störende Effekt in sehr viel geringerem Maße auf und die Lage der Spiegel zum Entladungsspalt bleibt erhalten. Dadurch ergibt sich eine Steigerung der Konstanz und der erreichbaren Ausbeute am Laserlicht.

Besonders vorteilhaft ist dabei, wenn die Bezugsebene durch eine Befestigungsplatte verkörpert wird, die mit den Elektroden und zumindest auf einer Seite mit Stäben, die aus einem Material mit sehr kleinem Temperaturausdehnungskoeffizienten bestehen, verbunden ist, und wenn die Stäbe mit zumindest einer Halteplatte für die Spiegel, nicht aber mit einer Stirnwand starr verbunden sind. Dabei kann die Stabilisierung des Abstandes zwischen der Bezugsebene und dem auf der Halteplatte befestigten Spiegel ausreichend sein, insbesondere wenn Teile wie die Spiegelhalterung den nicht konstant gehaltenen Abstand zwischen der Bezugsebene und dem zweiten Spiegel mit negativem Vorzeichen nachbilden und somit die Längenänderung auf der einen Seite durch eine entsprechende Längenänderung auf der anderen Seite kompensieren. Es kann aber auch von der Bezugsebene nach beiden Richtungen je eine Anordnung von Stäben ausgehen, so daß zwei Halteplatten gegenüber der Bezugsebene auf konstantem Abstand gehalten werden. So wird eine symmetrische Verformung erreicht, die erheblich weniger störend wirkt, als eine einseitige Verformung bei einer Ausführung gemäß der älteren Anmeldung. Eine weitere Verringerung der Verbiegungen und eine Verbesserung der Lagegenauigkeit wird erreicht, indem die Stäbe in der Nähe der Befestigungsstellen an der Befestigungsplatte beziehungsweise der Halteplatte jeweils einen Biegebereich mit verkleinertem Querschnitt enthalten. Dadurch wird eine Verwindung der Halteplatte und damit ein Verkippen des Spiegels weitgehend vermieden.

In einer vorteilhaften Ausführungsform ist zumindest eine der Elektroden mit einer Versteifungsplatte starr verbunden, welche gegen die Befestigungsplatte abgestützt ist. Damit wird eine Verbiegung der Elektroden verhindert, mechanische Schwingungen, die beim Betrieb auf die Elektroden übertragen werden könnten, werden unterdrückt.

Vorteilhaft wird im Bereich der Befestigungsplatte ein Befestigungselement zur Befestigung des Lasers in einer Halterung vorgesehen. Durch diese Ausführungsform lassen sich Einflüsse von äußeren Schwingungen und Beschleunigungen weiter dämpfen, da sie in der Mitte des Gerätes angreifen, sich symmetrisch ausbreiten und dadurch weniger störend auswirken.

Eine gut justierbare Ausführungsform ist gegeben, indem die Stäbe außerhalb des Gehäuses auf einer Seite der Befestigungsplatte angeordnet sind, indem an deren von der Befestigungsplatte entfernten Enden eine Halteplatte und an dieser eine Spiegelhalterung angebracht sind, indem die Spiegelhalterung durch eine Ausnehmung in einer Stirnwand in das Gehäuse hineinragt und indem ein Balgen zwischen der Stirnwand und der Halteplatte angeordnet ist, welcher die Ausnehmung umfaßt und das Gehäuse vakuumdicht abschließt. Hierbei kann eine Längenänderung des freiliegenden Teiles der Elektroden durch eine entsprechende Längenänderung der Spiegelhalterung ausgeglichen werden, wenn die Werkstoffe entsprechend gewählt werden. Die beschriebene Ausführungsform hat außerdem den Vorteil, daß die Spiegel von außen fein justiert werden können und daß über den Balgen mechanische Schwingungen des Gehäuses oder der Halteplatte gedämpft werden. Schwingungen stören, da sie sich einerseits auf die Laserleistung und andererseits auf die Strahllagestabilität ungünstig auswirken.

Eine weitere günstige Ausführungsform ist gegeben, indem an die Befestigungsplatte im Inneren des Gehäuses beidseitig Stäbe angrenzen, indem auf jeder Seite an den von der Befestigungsplatte entfernt liegenden Enden der Stäbe Halteplatten angebracht sind, indem diese Halteplatten die Spiegel tragen, indem eine der Halteplatten eine Strahldurchtrittsöffnung aufweist, welche mit einem Strahlaustrittsfenster in der zunächst liegenden Stirnwand des Gehäuses in Strahlrichtung fluchtet und indem zwischen den Stirnwänden und den zunächst liegenden Halteplatten Dämpfungsglieder zur Dämpfung von mechanischen Schwingungen liegen.

Die Erfindung wird nun anhand von zwei Figuren näher erläutert. Sie ist nicht auf die in den Figuren gezeigten Beispiele beschränkt. Die Figuren zeigen Längsschnitte durch erfindungsgemäße Laser in geschnittener Darstellung schematisch.

Elektroden 1 und 2 begrenzen einen Entladungsspalt 3 eines Bandleiterlasers. Auf der Elektrode 1 ist ein Resonatorspiegel 4 angeordnet, während der zweite Resonatorspiegel 5 an einer Spiegelhalterung 6 befestigt ist, die durch eine Ausnehmung 16 in einer Stirnwand 11 des Gehäuses 9 in letzteres hineinragt. Die Spiegelhalterung 6 ist auf einer Halteplatte 12 befestigt. Ein Balgen 15 umfaßt die Ausnehmung 16 und stellt eine vakuumdichte Verbindung zwischen der Stirnwand 11 und der Halteplatte 12 her und dichtet somit den Laser ab. Die Halteplatte 12 ist über Stäbe 8 mit einem sehr geringen Temperaturausdehnungskoeffizienten mit einer Befestigungsplatte 13 verbunden, welche hier einen Teil des Gehäuses bildet, in dieses hineinragt und die miteinander mechanisch fest verbundenen Elektroden 1 und 2 trägt. Die Stäbe 8 weisen jeweils an beiden Enden Biegebereiche 26 auf, wodurch eine verbesserte Parallelführung der Halteplatte 12 erreicht wird. Eine Versteifungsplatte 14 versteift die Elektrode 1 und stützt sich gleichzeitig gegen die Befestigungsplatte 13 ab, so daß ein stabiler Aufbau gewährleistet ist, welcher auch bei Beanspruchung durch Beschleunigungen keine unzulässigen Verformungen erfährt.

Durch geeignete Materialauswahl kann eine infolge von Temperaturschwankungen auftretende Längenänderung der Elektroden 1, 2 durch eine entsprechende Längenänderung der Halterung 6 kompensiert werden, so daß der Abstand zwischen den Resonatorspiegeln 4 und 5 konstant bleibt.

Die Ausnehmung 16 in der Stirnwand 11 weist einen größeren Durchmesser auf, als die Halterung 6, so daß Verbiegungen oder Schwingungen des Gehäuses 9 nicht auf dem Spiegel übertragen werden können.

Ein nicht dargestelltes Strahlaustrittsfenster liegt hinter der Spiegelhalterung 6. Eine Strahldurchtrittsöffnung 25 in der Halteplatte 22 fluchtet mit dem Strahlaustrittsfenster.

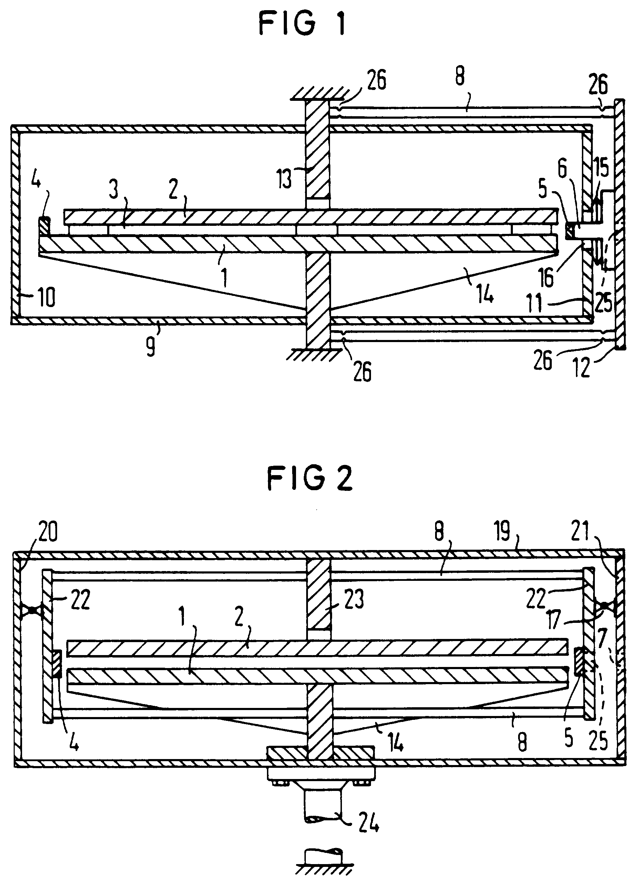

FIG 2 zeigt ein Lasergehäuse 19, in welches eine Befestigungsplatte 23 eingebaut ist. In der Befestigungsplatte 23 befindet sich die Bezugsebene für die Fixierung der Spiegel 4, 5 gegenüber den Elektroden 1, 2. An die Befestigungsplatte 23 grenzen beidseitig Stäbe 8 an, wobei vorzugsweise zumindest vier Stäbe verwendet werden. An den von der Befestigungsplatte abgewandten Enden der Stäbe 8 sind Halteplatten 22 angebracht, welche die Spiegel 4 bzw. 5 tragen. Zwischen den Halteplatten 22 und den Stirnwänden 20, 21 des Gehäuses 19 sind Dämpfungsglieder 17 angeordnet, welche Relativbewegungen zwischen den Stirnwänden und den Halteplatten dämpfen und dadurch Schwingungen vermeiden.

Außerhalb des Gehäuses 19 ist im Bereich der Befestigungsplatte 23 ein Befestgungselement 24 angeordnet, welches zur Montage des Lasers dient. Die hier beschriebene, vollsymmetrische Anordnung eignet sich besonders zur Verwendung an schnell bewegten Schwenkarmen, da bei Halterung im Bereich der Befestigungsplatte keine unsymmetrische Beanspruchung des Lasers auftritt, die zu einer Beschädigung des Lasers führen könnte.

## Patentansprüche

1. Bandleiterlaser, welcher ein Gehäuse (9,19) und zwei Metallelektroden (1,2) enthält, zwischen denen ein Entladungsspal (3) gebildet ist, welcher zwei Resonatorspiegel (4,5) und auf einer Seite ein Strahlaustrittsfenster (7,25) enthält, wobei die Spiegel (4,5) durch zumindest zwei zueinander parallel laufende Stäbe (8) mit sehr geringem Temperaturausdehnungskoeffizienten in einem genau fixierten gegenseitigen Abstand gehalten werden, wobei die Elektroden (1,2) in Richtung des Laserstrahles nur an einer Stelle, der Bezugsebene, mit dem Gehäuse (9,19) und den Stäben (8) starr verbunden sind und an einer zweiten Stelle gegenüber dem Gehäuse gegen senkrecht zum Entladungsspalt laufende Bewegungen gesichert sind, **dadurch gekennzeichnet**, daß zumindest ein Spiegel (5) an einer Halterung (6) in seiner Neigung gegenüber dem Entladungsspalt (3) justierbar befestigt ist, daß der justierbare Spiegel (5) über Stäbe (8) mit sehr geringem Temperaturausdehnungskoeffizienten in seiner axialen Lage und in seiner Winkellage gegenüber der Bezugsebene fixiert ist, daß die Bezugsebene zumindest annähernd in der Mitte zwischen den Resonatorspiegeln (4,5) liegt, und daß die Stäbe (8) mit einer Halteplatte (12,22) für den Spiegel (5), nicht aber mit einer Stirnwand (10,11,20,21) des Gehäuses (9,19) starr verbunden sind.

2. Bandleiterlaser nach Anspruch 1, **dadurch gekennzeichnet** , daß die Bezugsebene durch eine Befestigungsplatte (13) verkörpert wird, die mit den Elektroden (1,2) und zumindest auf einer Seite mit den Stäben (8) starr verbunden ist.

3. Bandleiterlaser nach einem der Ansprüche 1 oder 2, **dadurch gekennzeichnet**, daß die Stäbe (8) in der Nähe der Befestigungsstellen an der Befestigungsplatte (13) und der Halteplatte (12,22) jeweils einen Biegebereich (26) mit verkleinertem Querschnitt enthalten.

4. Bandleiterlaser nach einem der Ansprüche 1 bis 3, **dadurch gekennzeichnet**, daß zumindest eine der Elektroden (1,2) mit einer Versteifungsplatte (14) starr verbunden ist, welche gegen die Befestigungsplatte (13,23) abgestützt ist.

5. Bandleiterlaser nach einem der Ansprüche 1 bis 4, **dadurch gekennzeichnet**, daß im Bereich der Befestigungsplatte (13,23) ein Befestigungselement (24) für eine äußere Halterung des Lasers vorgesehen ist.

6. Bandleiterlaser nach einem der Ansprüche 2 bis 5, **dadurch gekennzeichnet**, daß die Stäbe (8) außerhalb des Gehäuses (9,19) auf einer Seite der Befestigungsplatte (13,23) angeordnet sind, daß an deren von der Befestigugnsplatte (13,23) entfernten Enden eine Halteplatte (22) und an dieser eine Spiegelhalterung angebracht sind, daß die Spiegelhalterung durch eine Ausnehmung (16) in einer Stirnwand (11,22) in das Gehäuse (9,19) hineinragt und daß ein Balgen (15) zwischen der Stirnwand (11,22) und der Halteplatte (12,22) angeodnet ist, welche die Ausnehmung (16) umfaßt und das Gehäuse (9,19) vakuumdicht abschließt.

7. Bandleiterlaser nach Anspruch 2, **dadurch gekennzeichnet** , daß an die Befestigungsplatte (23) im Inneren des Gehäuses (19) befestigte Stäbe (8) angrenzen, daß auf jeder Seite an den von der Befestigungsplatte (23) entfernt liegenden Enden der Stäbe Halteplatten (22) angebracht sind, daß die Halteplatten (22) die Spiegel (4,5) tragen, daß eine der Halteplatten (22) eine Strahldurchtrittsöffnung (25) aufweist, welche mit einem Strahldurchtrittsfenster (7) in der zunächst liegenden Stirnwand (21) des Gehäuses (19) in Strahlrichtung fluchtet, und daß zwischen den Stirnwänden (20,21) und den zunächst liegenden Halteplatten (22) Dämpfungsglieder (17) zur Bedämpfung von mechanischen Schwingungen liegen.

## Claims

1. Stripline laser which contains a housing (9, 19) and two metal electrodes (1, 2) between which a discharge gap (3) is formed, which stripline laser contains two resonator mirrors (4, 5) and, on one side, a beam outlet window (7, 25), the mirrors (4, 5) being held at a precisely fixed mutual separation by means of at least two rods (8), which run parallel to one another and have a very low temperature coefficient of expansion, the electrodes (1, 2) being rigidly connected in the direction of the laser beam at only one point, the reference plane, to the housing (9, 19) and to the rods (8), and being secured at a second point with respect to the housing against movements running at right angles to the discharge gap, characterized in that at least one mirror (5) is attached to a holding device (6) such that its inclination can be adjusted with respect to the discharge gap (3), in that the adjustable mirror (5) is fixed in its axial position via rods (8) having a very low temperature coefficient of expansion and is fixed in its angular position with respect to the reference plane, in that the reference plane lies at least approximately in the centre between the resonator mirrors (4, 5), and in that the rods (8) are rigidly connected to a retaining plate (12, 22) for the mirror (5), but not to an end wall (10, 11, 20, 21) of the housing (9, 19).

2. Stripline laser according to Claim 1, characterized in that the reference plane is embodied by means of a mounting plate (13) which is rigidly connected to the electrodes (1, 2) and, at least on one side, to the rods (8).

3. Stripline laser according to one of Claims 1 or 2, characterized in that the rods (8) each contain a bend region (26) with a reduced cross-section in the vicinity of the attachment points to the mounting plate (13) and to the retaining plate (12, 22).

4. Stripline laser according to one of Claims 1 to 3, characterized in that at least one of the electrodes (1, 2) is rigidly connected to a stiffening plate (14) which is supported with respect to the mounting plate (13, 23).

5. Stripline laser according to one of Claims 1 to 4, characterized in that a mounting element (24) for an external holding device of the laser is provided in the region of the mounting plate (13, 23).

6. Stripline laser according to one of Claims 2 to 5, characterized in that the rods (8) are arranged outside the housing (9, 19) on one side of the mounting plate (13, 23), in that a retaining plate (22) is fitted to those ends of said rods (8) which are remote from the mounting plate (13, 23) and a mirror holding device is fitted to said retaining plate (22), in that the mirror holding device projects into the housing (9, 19) through a cutout (16) in one end wall (11, 22), and in that a bellows (15) is arranged between the end wall (11, 22) and the retaining plate (12, 22), surrounds the cutout (16) and closes the housing (9, 19) in a vacuum-tight manner.

7. Stripline laser according to Claim 2, characterized in that rods (8) which are mounted in the interior of the housing (19) abut against the mounting plate (23), in that retaining plates (22) are fitted on each side to those ends of the rods which are located remotely from the mounting plate (23), in that the retaining plates (22) are fitted with the mirrors (4, 5), in that one of the retaining plates (22) has a beam passage opening (25) which is aligned in the beam direction with a beam passage window (7) in that end wall (21) of the housing (19) which is located closest, and in that damping elements (17) for damping mechanical oscillations are located between the end walls (20, 21) and the retaining plates (22) located closest.

## Revendications

1. Laser à ruban, qui comporte un boîtier (9,19) et deux électrodes métalliques (1,2), entre lesquelles est ménagée une fente de décharge (3), qui comporte deux miroirs de cavité résonnante (4,5) et, d'un côté, une fenêtre (7,25) de sortie du rayonnement, les miroirs (4,5) étant maintenus mutuellement à distance de façon précise, par au moins deux barres (8) parallèles qui ont un très faible coefficient de dilatation thermique, les électrodes (1,2) étant reliées rigidement, dans la direction du faisceau laser, uniquement en un emplacement, le plan de référence, au boîtier (9,19) et aux barres (8) et étant bloquées, en un second emplacement, vis à vis du boîtier, contre des déplacements perpendiculaires à la fente de décharge, caractérisé par le fait qu'au moins un miroir (5) est fixé à un support (6), de telle sorte que son inclinaison par rapport à la fente de décharge (3) peut être ajustée, que le miroir (5) ajustable est fixé dans sa position axiale et dans sa position angulaire par rapport au plan de référence, par l'intermédiaire de barres (8) qui ont un très faible coefficient de dilatation thermique, que le plan de référence est situé au moins approximativement au milieu entre les deux miroirs (4,5) de cavité résonnante et que les barres (8) sont reliées rigidement à une plaque de retenue (12,22) pour le miroir (5), mais pas à une paroi frontale (10,11,20,21) du boîtier (9,19).

2. Laser à ruban suivant la revendication 1, caractérisé par le fait que le plan de référence est matérialisé par une plaque de fixation (13), qui est reliée rigidement aux électrodes (1,2) et, au moins d'un côté, aux barres (8).

3. Laser à ruban suivant l'une des revendications 1 ou 2, caractérisé par le fait que chacune des barres (8) comporte, à proximité des points de fixation sur la plaque de fixation (13) et sur la plaque de retenue (12,22), une zone de flexion (26) dont la section transversale est réduite.

4. Laser à ruban suivant l'une des revendications 1 à 3, caractérisé par le fait qu'au moins l'une des électrodes (1,2) est reliée rigidement à une plaque de renforcement (14), qui prend appui contre la plaque de fixation (13,23).

5. Laser à ruban suivant l'une des revendications 1 à 4, caractérisé par le fait qu'un élément de fixation (24) destiné à réaliser un support extérieur du laser est prévu dans la zone de la plaque de fixation (13,23).

6. Laser à ruban suivant l'une des revendications 2 à 5, caractérisé par le fait que les barres (8) sont disposées à l'extérieur du boîtier (9,19), sur un côté de la plaque de fixation (13,23), qu'une plaque de retenue (22) est montée sur les extrémités des barres, éloignées de la plaque de fixation (13,23) et qu'un support de miroir est monté sur cette plaque de retenue, que le support de miroir fait saillie à l'intérieur du boîtier (9,19) par une ouverture (16) ménagée dans une paroi frontale (11,22), et qu'un soufflet (15) est disposé entre la paroi frontale (11,22) et la plaque de retenue (12,22), qui entoure l'ouverture (16) et ferme le boîtier (9,19) d'une manière étanche au vide.

7. Laser à ruban suivant la revendication 2, caractérisé par le fait que des barreaux (8) fixés à l'intérieur du boîtier sont contigus à la plaque de fixation (23), que des plaques de retenue (22) sont montées de chaque côté sur les extrémités des barres, qui sont éloignées de la plaque de fixation (23), que les plaques de retenue (22) portent les miroirs (4,5), que l'une des plaques de retenue (22) comprend une ouverture (25) de passage pour le rayonnement, qui est alignée avec une fenêtre (7) de passage pour le rayonnement ménagée dans la paroi frontale (21) voisine du boîtier (19), suivant la direction du rayonnement et que des organes d'amortissement (17) destinés à amortir des vibrations mécaniques sont disposés entre les parois frontales (20,21) et les plaques de retenue (22) situées à proximité immédiate.
